# EUROPEAN PATENT APPLICATION

(11) **EP 2 821 639 A1**
(43) Date of publication of application: **07.01.2015**
(21) Application number: 13382262.7
(22) Date of filing: 02.07.2013
(51) Int. Cl.: F03D 11/00, F03D 7/02, F03D 1/00

(54) **Wind turbine blade leading edge inspection**

(71) Applicant: Alstom Renovables España, S.L., 08005 Barcelona (ES)
(72) Inventor: Puigcorbé Punzano, Jordi, 08912 Badalona (ES)
(74) Representative: ZBM Patents - Zea, Barlocci & Markvardsen

(57) **Abstract**

A method for inspecting a leading edge of a rotor blade of a wind turbine, having a tower, a rotor hub arranged substantially at the top of the tower, the rotor hub carrying one or more blades, and the wind turbine furthermore including one or more pitch mechanisms for rotating the blades around their longitudinal axes, and one or more sensors. The method comprises rotating the rotor hub to position a first blade substantially near the wind turbine tower, rotating the first blade so that a leading edge of the first blade substantially faces rearwardly, inspecting the leading edge of the first blade using one or more of the imaging sensors. The present disclosure also relates to a wind turbine for implementing such methods.

## Description

The present disclosure relates to the inspection of a blade of a wind turbine.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor or through the use of a gearbox. The hub, gearbox (if present), generator and other systems are usually mounted in a nacelle on top of a wind turbine tower.

Wind turbine blades are typically designed for optimum aerodynamic conditions to optimize the wind turbine's performance for maximum generation of electricity. However, during operation, the blades are exposed to numerous atmospheric conditions that may cause a built-up of ice, dirt or grime from dust, salt (especially in off-shore wind turbines), dead insects, bird droppings and other foreign substances, on the surface of the blade. Besides, the blade can erode under certain conditions such as those found in e.g. desert climates, in which blade exposure to dust can lead to premature wear.

Dirty and/or degraded blades generate less lift, thus decreasing the efficiency of the wind turbine. In natural conditions, ice, dirt and insects often soil wind turbine blades particularly at the leading edge, which is also the most affected region when premature surface erosion is considered. The leading edge of a blade is the foremost edge of the blade. Roughness at the leading edge (either related to built-up of elements or surface erosion) may cause an early transition from laminar to turbulent flow, i.e. whereas a laminar boundary layer would be arranged around a clean blade section, a dirty or degraded blade section may result in a turbulent boundary layer for the same wind speed and the same angle of attack. This may reduce the maximum lift that can be obtained and the curve of the lift coefficient may have a reduced slope starting at a certain angle of attack. The lift is thus reduced for a given angle of attack and the drag may be increased due to increased friction. As a result, a loss in power production may occur.

Furthermore, resonance vibrations resulting from the degradation of the blade's leading edge may create undesirable loads that neither the turbine nor the blades were designed to carry.

When a blade sustains high levels of damage, repair options are limited. Either the blade must be brought to the ground to be repaired, or it can be replaced by a new blade. Both options are both very expensive and involve time consuming procedures. The chances that a blade will reach its desired life expectancy are greatly increased if the leading edges are routinely inspected and maintained.

Known ways of inspecting a blade include manually inspecting a blade, i.e. involving personnel in situ. Alternative ways of inspecting a blade include arranging a camera on a wind turbine. However, generally images captured by such cameras do not necessarily give the necessary information in order to optimize maintenance of the blade on the one hand and performance on the other hand.

Therefore there is a need for a method for the safe and proximate inspection and maintenance of a blade's leading edge.

### SUMMARY

In a first aspect, a method for inspecting a leading edge of a rotor blade of a wind turbine is provided. The wind turbine includes a tower, a rotor hub arranged substantially at the top of the tower, the rotor hub carrying one or more blades, and the wind turbine furthermore including one or more pitch mechanisms for rotating the blades around their longitudinal axes. The wind turbine furthermore has one or more sensors. The method comprises rotating the first blade so that the leading edge of the first blade substantially faces rearwardly and inspecting the leading edge of the first blade using one or more of the sensors.

In this manner, rotor blades' leading edges may be effectively inspected to avoid the damaging effects of leading edge erosion and the attachment and accumulation of airborne particles such as dirt and insects by inspection using one or more imaging sensors arranged on the wind turbine tower or on the nacelle.

The sensors may be imaging sensors or imaging systems, such as e.g. one or more camera(s) and/or on or more laser emitters and receivers.

In some embodiments, the method may comprise rotating the rotor hub to position a first blade substantially near the wind turbine tower. The rotation of the blade in front of the tower and the rotation of the blade for the leading edge to face the tower enable the safe and proximate inspection of the leading edge by imaging sensors arranged on the tower.

In some embodiments, the method may furthermore comprise processing the data captured by the imaging sensors and determining a status of the leading edge of the first blade based on the processed data. The status may be determined by comparing the processed data with older data of the same leading edge (to detect degradation by comparing with the same blade) or with predetermined stored data representative of various conditions (ice formation, dirt accretion, erosion of the blade) such as to determine what the status of the blade is. By determining the status of the blade, an appropriate maintenance action can be determined. This of course includes the option of not carrying out any maintenance action.

In some embodiments, a maintenance signal may be generated after determination of the status. This signal may be sent to a control center located away from the wind turbine. The control center may thus send maintenance personnel to the wind turbine in question. Alternatively, a maintenance operation may be carried out automatically in response to the determination of the status, if suitable maintenance actuators are provided on the wind turbine. For example, spray nozzles for spraying water and/or a cleaning solution on the blade. These spray nozzles may be arranged along the height of the wind turbine tower. In another example, de-icing actuators may (additionally) be arranged in the blades of the wind turbine. Other examples of maintenance actuators include warm air blowers.

In some embodiments, before inspection is carried out, a low wind speed is detected and subsequently the inspection is started. These embodiments take into account that electrical power generation is not interrupted or affected too much in order to carry out the inspection and possibly maintenance.

In some embodiments, rotation of the rotor is initially performed with a 0° pitch and pitch rotation to -90° is carried out only once the blade is already substantially in the front of the tower.

In an alternative aspect, a wind turbine is provided having a tower, a rotor hub arranged substantially at the top of the tower, the rotor hub carrying one or more blades, one or more pitch mechanisms for rotating the blades around their longitudinal axes, one or more imaging sensors, and a control unit configured for carrying out a method substantially as hereinbefore described.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 illustrates a horizontal cross-sectional view of a tower of a wind turbine and a rotor blade in two alternative pitch positions;
Figures 2a - 2c illustrate an example of alternative pitch positions for inspection of a leading edge of a blade;
Figures 3a and 3b illustrates an alternative example of inspection of a leading edge of a blade.
Figure 4a illustrates a side view of a wind turbine tower wherein one rotor blade is positioned near the wind turbine tower with its leading edge facing away from the tower for normal operation; and
Figure 4b illustrates a side view of a wind turbine tower wherein one rotor blade is positioned near the wind turbine tower with its leading edge facing the tower for inspection and optional maintenance thereof.

### DETAILED DESCRIPTION OF EMBODIMENTS

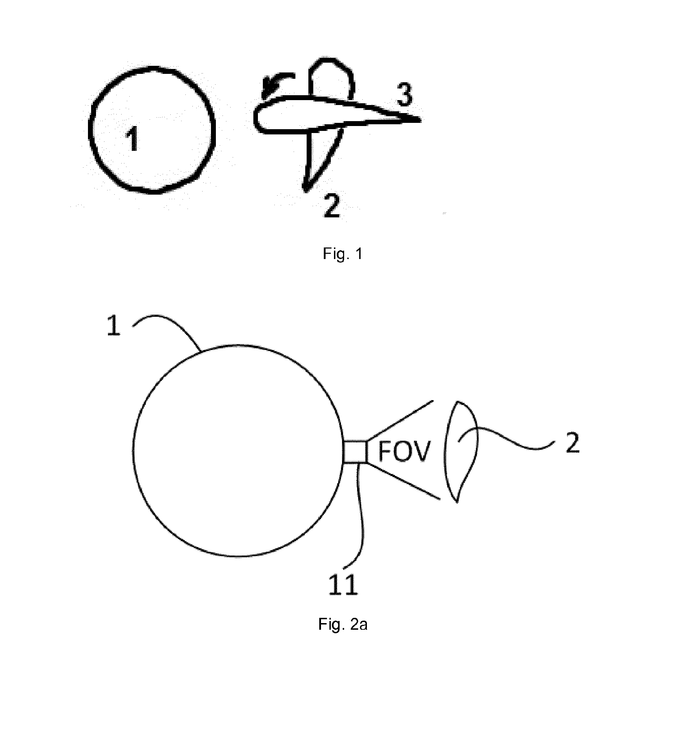

Figure 1 shows two alternative blade leading edge pitch positions relative to the wind turbine tower (1). A blade in a normal operation position (2) is represented with its leading edge substantially at a 90 degree angle away from the wind turbine tower (1). This position corresponds to a 0° pitch angle. The 0° pitch angle is to be understood as the position of the blade in normal operation for wind speeds from a cut-in wind speed to a nominal wind speed.

In accordance with examples of the present invention, an inspection position (3) is also shown. In this position, the blade's leading edge substantially faces rearwardly. "Rearwardly" in this sense may be interpreted as in the direction of the wind, i.e. facing the tower or the nacelle. In the illustrated case, the wind turbine blade faces the wind turbine tower for proximate location of the blade's leading edge to inspection sensors (not shown) and maintenance actuators (not shown) which may be arranged substantially along the tower's length.

Position 3 corresponds to a -90° pitch angle.

In hitherto known operations of wind turbines, blades are not generally rotated to negative pitch positions. From a cut-in wind speed to a nominal wind speed, the blades are usually not pitched. The pitch angle in these conditions may be 0°. When the wind speed increases to values above the nominal wind speed, the blades are pitched towards a positive pitch angle, in order to decrease the torque of the rotor. When the turbine is to be stopped (e.g. because of very high wind speeds or because of maintenance), the blades are generally pitched to a 90° pitch angle. This is called feathering. In normal operation therefore, the range of pitch angles used is from substantially 0° - 90° pitch angles.

On the contrary, in examples of the present invention, the pitch angle of the blades is negative, e.g. close to -90°.

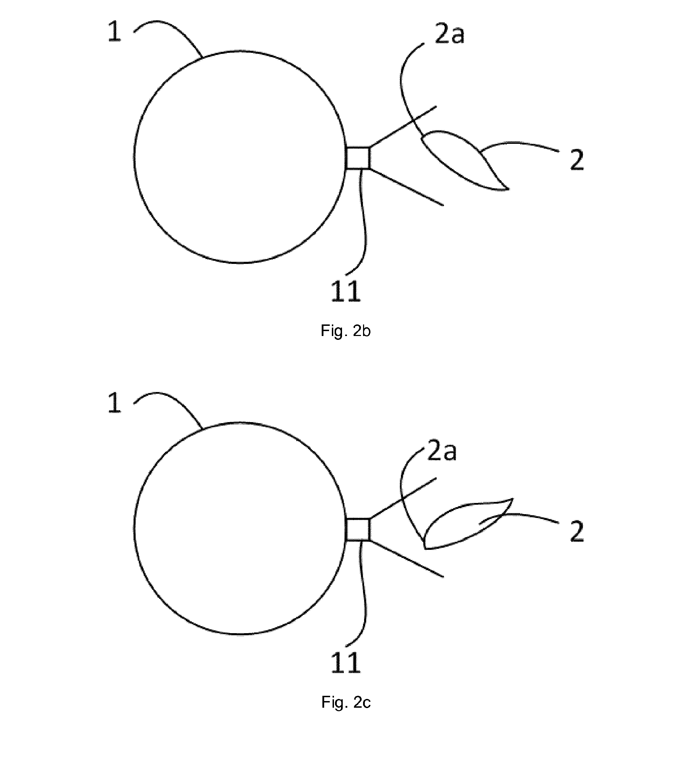

An alternative example is illustrated with reference to figures 2a - 2c. Figure 2a illustrates a blade in a 0° pitch position. In this example, as illustrated in figure 2b, the blade may be positioned at a pitch angle of between -65° and - 80° and a first step of inspection using an imaging sensor 11 arranged on the wind turbine tower may be carried out in this position.

Then, as illustrated in figure 2c, a second step of inspection using the same imaging sensor may be carried out when the blade is positioned at a pitch angle of between -100° and -115°. These two pitch positions allow a leading edge (2a) to be inspected both by viewing a portion of a suction side of a blade and by viewing a portion of a pressure side of the blade.

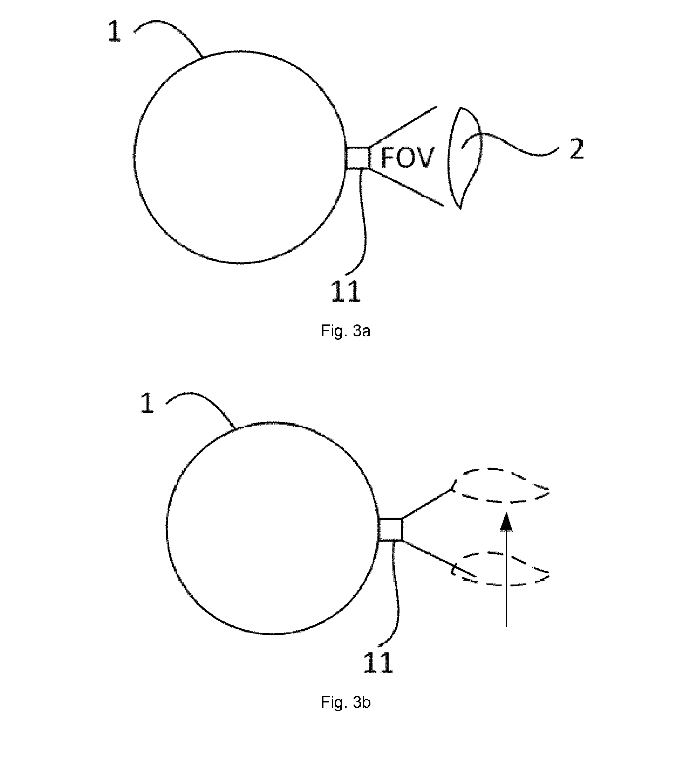

In yet a further example, as illustrated in figures 3a and 3b, the blade may be in a -90° pitch angle, and various images may be captured as the blade passes in front of the wind turbine tower. Depending on the image systems or imaging sensors used, the blade may pass relatively slowly in front of the wind turbine tower. Also in this case, images of both the pressure side and the suction side may be captured.

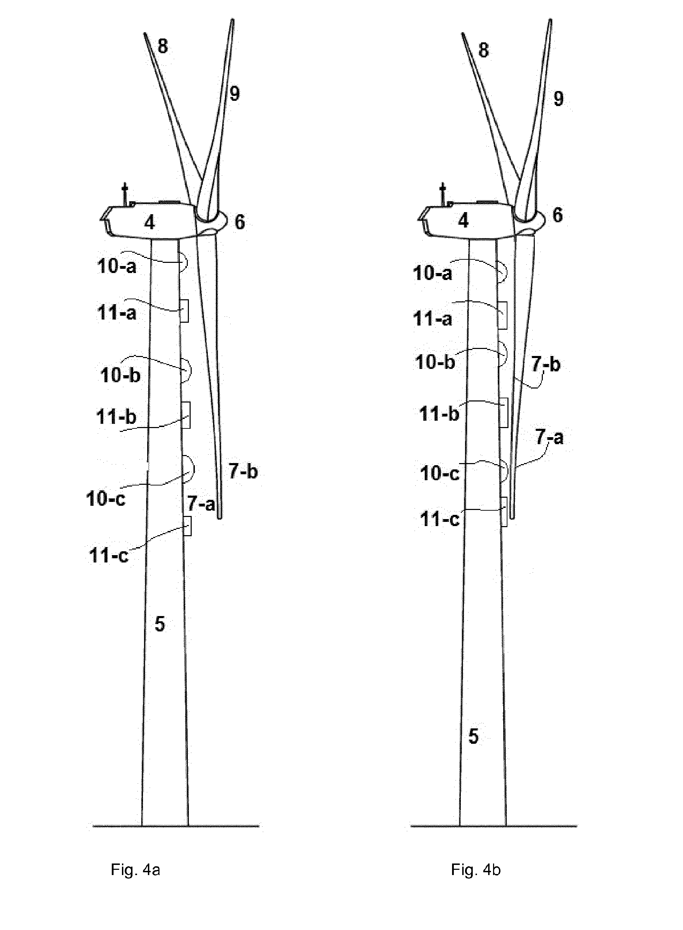

The wind turbine illustrated in figure 4a shows a wind turbine comprising a tower (5), a nacelle (4) arranged on top of the tower, a rotor hub (6) carrying three blades (7, 8, 9).

In addition, figure 4a shows an example in which a series of imaging sensors (10-a, 10-b, 10-c) and a series of maintenance actuators (11-a, 11-b, 11-c) positioned along the length of the tower and substantially facing the lower rotor blade. Note that in figure 4b, the same wind turbine is shown, wherein the lower blade 7 has been pitched towards an inspection pitch position, that is, a -90° pitch has been applied so that the leading edge is now facing the tower.

In some embodiments, the one or more imaging sensors (10) may comprise different types of sensors. Types of imaging sensors (10) that may be used include cameras, and lasers for geometric profile and roughness measurement. Additional types of inspection sensors not discussed here may be used. The readings from the inspection sensors are processed by a processor (e.g a computer) and compared to previous readings or to other predetermined data. If surface degradation is detected, a corresponding maintenance or repair action may be executed using the series or array of maintenance actuators (11) which in this example are also distributed along the tower, preferably but not necessarily close to the sensors.

In some embodiments, the one or more maintenance actuators (11) may comprise one or more different types of actuators and/or a combination thereof. Types of maintenance actuators (11) may comprise high pressure jets of sea water (especially suitable for ice removal), hot water (either specially heated or resulting from the already present cooling circuit), antifreeze (to mitigate further ice formation) or a detergent liquid for removing attached and accumulated dirt, or spray nozzles to top up a protective or restoring surface coating, or remotely controlled robotic arms and/or tools to conduct the desired maintenance. Additional types of maintenance actuators not discussed here may also be used.

In other embodiments, if erosion of the leading edge or accumulation of dirt thereon is not detected, then the maintenance actuators may take no action.

In some embodiments, the imaging sensor or system may be a camera, whereby the camera captures an image of the area of the blade's leading edge and transmits it to a control center or compares it immediately with a predetermined pattern.

In other embodiments, the imaging sensor or imaging system may be a laser transmitter/receiver, whereby a laser beam is directed onto an area on the blade's leading edge surface and the reflected signal thereof is received and analyzed by the computer or a human computer operator to determine the state of the leading edge.

In some embodiments, at least one imaging sensor may be located on the tower as close as possible to the tip of the blade, say at about 80-90% of the blade's length. In this case, the imaging sensors may be positioned at a predetermined height of the tower, so that when the blade is pointing downwards substantially in front of the tower, a section of the blade near the tip is positioned close to at least one imaging sensor.

The aerodynamic profile in the section of the blade close of the tip is critical to the performance of the wind turbine and it's where the effects of the attachment and accumulation of dirt are especially detrimental. In the case of erosion, this will be more pronounced at the tip of the blade as the linear velocity is maximum in that area resulting in greater wear.

In some embodiments, one sensor may be directed at the tip of the blade, also known as the critical point, whilst another imaging sensor may be directed at an intermediate point considered representative of the general condition of the blade.

In other embodiments, a sensor (11) need not necessarily be fixed to the tower and may be attached to a guide (e.g. a rail) along the tower's length and/or width, whereby the sensor may move accordingly. Similarly, a maintenance actuator (10) need not necessarily be fixed to the tower and may be attached to a guiderail along the tower's length and/or width, whereby the actuator may move accordingly.

In yet another (not depicted) example, an imaging sensor may be arranged on the nacelle facing the blades when above the tower. By rotating the blade to a -90° pitch position, the leading edge may be inspected using such a sensor. In this case, the blade may be pointing upwards, rather than pointing substantially downwards as illustrated in previous examples.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A method for inspecting a leading edge of a rotor blade of a wind turbine, having
a tower,
a rotor hub arranged substantially at the top of the tower, the rotor hub carrying one or more blades, and the wind turbine furthermore including one or more pitch mechanisms for rotating the blades around their longitudinal axes, and
one or more sensors, the method comprising
rotating a first blade so that a leading edge of the first blade substantially faces rearwardly,
inspecting the leading edge of the first blade using one or more of the sensors.

2. A method according to claim 1, further comprising rotating the rotor hub to position a first blade substantially near the wind turbine tower.

3. A method according to claim 1 or 2, wherein rotating the rotor hub to position the first blade substantially near the wind turbine tower comprises rotating the rotor hub such that the first blade is positioned substantially straight in front of the wind turbine tower.

4. A method according to any of claims 1 - 3, wherein rotating the first blade comprises rotating the first blade to -90° pitch angle.

5. A method according to any of claims 1 - 3, wherein rotating the first blade comprises rotating the first blade to a pitch angle of between -65° and - 80 ° pitch angle and subsequently rotating the first blade to a pitch angle of between -100° and -115°.

6. A method according to any of claims 1 - 5, wherein inspecting the leading edge of the first blade comprises processing data captured by the sensors, and determining a status of the leading edge of the first blade based on the processed data.

7. A method according to claim 6, wherein determining a status of the leading edge of the blade comprises comparing the processed data to older data of the leading edge of the first blade and/or to predetermined data of the leading edge of a blade.

8. A method according to claim 6 or 7, further comprising performing a maintenance action on the first blade based on the determined status of the leading edge of the first blade.

9. A method according to claim 8, wherein performing a maintenance action on the first blade comprises de-icing the first blade or spraying water and/or cleaning solution onto the first blade.

10. A method for inspecting a leading edge of a wind turbine blade comprising detecting a relatively low wind speed and subsequently carrying out a method according to any of claims 1 - 9.

11. A method of inspecting the blades of a wind turbine comprising the method for inspecting a leading edge of a rotor blade according to any of claims 1 - 10, and furthermore comprises repeating the method for all blades of the wind turbine.

12. A wind turbine having
a tower,
a rotor hub arranged substantially at the top of the tower, the rotor hub carrying one or more blades,
one or more pitch mechanisms for rotating the blades around their longitudinal axes,
one or more sensors, and
a control unit configured for carrying out a method according to any of claims 1 - 11.

13. A wind turbine according to claim 12, wherein one or more of the sensors are arranged on the wind turbine tower.

14. A wind turbine according to claim 13, wherein a sensor is arranged on the wind turbine tower at a predetermined height of the tower such as to face a tip section of the blade when the blade is in a substantially vertical position.

15. A wind turbine according to claim 13, wherein a sensor is arranged along a guide on the tower such that the imaging sensor can be displaced along the guide.
